# EUROPEAN PATENT SPECIFICATION

(11) **EP 2 867 423 B1**
(45) Date of publication and mention of the grant of the patent: **02.11.2016**
(21) Application number: 13728791.8
(22) Date of filing: 28.05.2013
(51) Int. Cl.: E04D 11/00, E04D 13/04

(54) **IMPROVEMENTS IN AND RELATING TO DRAINAGE SYSTEMS**
VERBESSERUNGEN AN UND IM ZUSAMMENHANG MIT DRAINAGESYSTEMEN
AMÉLIORATIONS APPORTÉES À DES SYSTÈMES DE DRAINAGE

(30) Priority: 28.05.2012 GB 201209435
(43) Date of publication of application: 06.05.2015
(73) Proprietor: A.B.G. Limited, Holmfirth, Yorkshire HD9 4DS (GB)
(72) Inventor: HUMBERSTONE, Stephen, Holmfirth Yorkshire HD9 4DS (GB); YOUNG, David, Holmfirth Yorkshire HD9 4DS (GB); BAMFORTH, Alan, Holmfirth Yorkshire HD9 4DS (GB)
(74) Representative: Appleyard Lees IP LLP
(86) International application number: PCT/GB2013/051413
(87) International publication number: WO 2013/179022

(56) References cited:
- WO-A1-02/086253
- DE-U1-202007 006 044

## Description

### Field of the Invention

The present invention relates to outflow controllers, for example such controllers that may comprise part of drainage structures. Example embodiments are particularly suited for use in drainage systems for roofs, including green roofs.

### Background to the invention

One of the advantages of a green roof is the capacity of the roof to absorb rainwater and thereby reduce the peak flow of rainwater into subsequent drainage systems. This reduces the risk of flooding the subsequent drainage systems. The capacity to spread drainage load over time contributes to a sustainable drainage system (often referred to as SUDS).

Problems arise when a green roof is not able to absorb rainwater as designed, for example if there are repeated heavy rainfall events in quick succession. In this situation the green roof may become saturated, which impacts on the SUDS performance. Building in additional capacity to cope with infrequent extreme rainfall events but without unduly increasing costs is a challenge.

In addition, controlling the rate of outflow from a green roof, and maintaining consistent outflow performance over the lifetime of the green roof poses problems, for example due to silting up of the drainage pathways in the green roof. Problems with the outflow can also impact on SUDS performance.

Furthermore, providing an outflow for a drainage system which is compatible with, and works effectively in any one of a range of different roof constructions is not straightforward.

WO 02/086253 A1 describes a device suitable for collecting and at least temporarily storing water on a substantially horizontal supporting surface to be at least partially covered by a multi-layer structure, the multi-layer structure compromising the following layers: (a) a water-capturing layer comprising a plurality of water storage volumes for receiving and storing water, (b) a filter layer covering the water-capturing layer, (c) between the base layer and the water-capturing layer, a layer of a water absorbing material to allow positioning of the water-capturing layer. At least part of the water storage volumes of the water-capturing layer are dimensioned such that they are capable of containing bulk water. The device comprised a water-level detector for the water-capturing layer and discharging water from the multi-layer structure to a second predetermined water-level, towards a water consumption circuit if the water level in the water-capturing layer exceeds a first predetermined value.

Example embodiments of the present invention aim to address at least one disadvantage of the prior art, whether identified herein or otherwise.

### Summary of the Invention

According to the present invention there is provided an apparatus and method as set forth in the appended claims. Other features of the invention will be apparent from the dependent claims, and the description which follows.

### Brief Introduction to the Drawings

For a better understanding of the invention, and to show how embodiments of the same may be carried into effect, reference will now be made, by way of example, to the accompanying diagrammatic drawings in which:
Figure 1 shows a side section view of a storage and attenuation structure and an outflow controller according to an example embodiment, arranged together in a drainage system;
Figure 2 shows a side section view of the storage and attenuation structure of Figure 1, and an outflow controller according to another example embodiment, arranged together in a drainage system;
Figures 3A-3E show perspective, elevation and sectional views of a first portion of an outflow controller according to an example embodiment; and
Figures 4A-4E show perspective, elevation and sectional views of a second portion of an outflow controller according to an example embodiment.

### Description of Example Embodiments

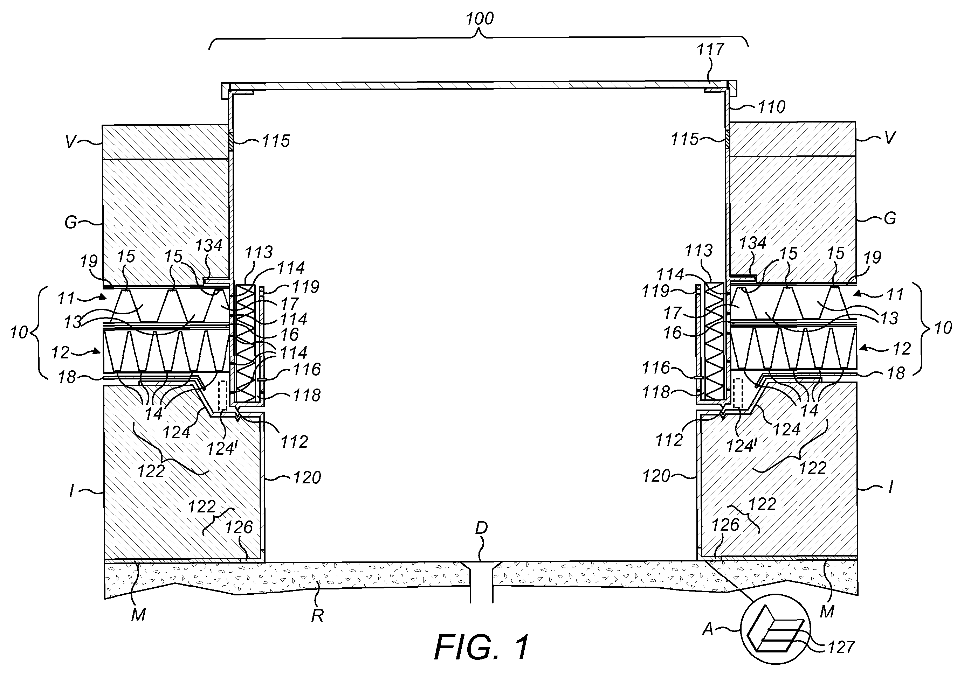

Figure 1 shows a side section view of a storage and attenuation structure 10 in use with an outflow controller 100. Together the storage and attenuation structure 10 and outflow controller 100 form part of a green roof structure which is provided above the structural elements of the roof R of a building. The green roof structure comprises vegetation V and a growth medium G. The roof R comprises a drain D to carry away excess rainwater from the green roof, after passage through the storage and attenuation structure 10 and the outflow controller 100. Also shown in Figure 1 is insulation material for the roof, denoted as I, and which is provided in position which is above a fluid-impermeable membrane M so as to form what is referred to as in inverted green roof configuration. In this inverted green roof a further breathable, waterproof membrane 18 is provided to give a further degree of water resistance to the overall roof structure, and to enable any moisture which finds its way into the insulation, e.g. on installation before the insulation is overlaid, to permeate out.

The storage and attenuation structure 10 is arranged to perform a number of functions. Firstly, it provides fluid storage, so that the growth medium G can be kept moist for longer and therefore providing better conditions for the vegetation V during periods where not much rain falls. Herein, the term "fluid" is generally to be understood as including any non-solid substance, for example liquids, gases, and combinations thereof, but in typical green roof applications the fluid will comprise water such as rain water, melt-water or the like. In addition to the storage of fluid to keep the growth medium G moist, the storage and attenuation structure 10 provides a SUDS function by buffering excess fluid and allowing that fluid to subsequently pass into the drain D over a relative longer period of time than if no storage or attenuation structure 10 was provided.

The storage and attenuation structure 10 comprises an upper layer 11 for supporting the growth medium G above an upper side thereof. Growth medium G is kept above the upper layer 11 by a fluid-permeable barrier layer 19. The upper layer 11 comprises fluid storage recesses 13 to collect and store fluid received from above the upper side of the upper layer 11. The fluid storage recesses 13 in of Figure 1 are in the form of downward pointing, truncated square-based pyramidal recesses, which are provided in regular arrangement across the surface of the sheet-like upper layer 11. Between the fluid storage recesses 13 are openings 15, formed is a border of material separating adjacent storage recesses 13. The openings 15 are circular, and an opening 15 is provided at each corner of each of the fluid storage recesses 13. The fluid-permeable barrier layer 19 serves to keep the openings 15 clear of growth medium G.

The openings 15 are formed above the fluid storage recesses 13 in order to allow fluid communication between the upper side of the upper layer 11 and a lower side thereof. In this way, the vast majority of any rain water which passes down through the vegetation V and growth medium G is initially collected in the fluid storage recesses 13. Any overflow fluid from the storage recesses 13 can drain through the openings 15 and into a lower layer 12 of the storage and attenuation structure 10.

The lower layer 12 receives fluid from the upper layer 11, and includes drainage pathways 14 to collect fluid received from the upper layer 11 and provide controlled drainage of that fluid. The drainage pathways 14 are formed between projections in the lower layer 12. The drainage pathways 14 are in fluid communication with space 17 between the fluid storage recesses 13 in the upper layer, such that the space 17 between the fluid storage recesses 13 provides additional fluid storage capacity beyond the capacity of the lower layer 12. In this way, when the drainage pathways 14 are filled to the level of the top of the lower layer 12, for example after a period in which when the rate of supply of fluid through the openings 15 exceeds the rate of drainage from the drainage pathways 14, the space 17 provides additional capacity storage capacity in the storage and attenuation structure 10 so that the peak flow from the storage and attenuation structure 10 is still smoothed. By using the space between the storage recesses 13 in this way, the storage and attenuation structure 10 can be made inexpensively from existing types of drainage layers, and offers improved performance in case of the type of infrequent, but increasingly important extreme rainfall events.

The rate at which fluid may drain from the drainage pathways 14 is controlled by the outflow controller 100, as described in more detail below.

In Figure 1, the upper layer 11 and the lower layer 12 are separated by a fluid-permeable layer 16, with the compressive weight of the growth medium G and the vegetation V enough to hold the layers together. The fluid-permeable layer 16 may comprise a filter layer. However, it will be understood that in other embodiments the layers may be formed as an integrated single component or formed as separate components adhered, welded or otherwise coupled to one another after separate manufacture, with or without an intermediate layer. In another variation, not shown, the storage recesses 13 in the upper layer 11 are coupled to their neighbours by load-sharing grooves arranged below the uppermost regions of the storage recesses, the load-sharing grooves arranged to enable fluid communication between adjacent storage recesses without the recesses overflowing to the level of the openings 15.

The outflow controller 100 operates to control release of fluid from the storage and attenuation structure 10 in a way which is principally dependent on the volume of fluid in the drainage pathways 14 and in the space 17 between the fluid storage recesses 13 in the upper layer 11.

Still referring to Figure 1, the outflow controller 100 shown is made up of a first portion 110 and a second portion 120. The first portion 110 comprises a flow controlling restrictor is and arranged to pass fluid received at the outflow controller through the flow controlling restrictor. The second portion 120 comprises a drain component arranged to receive fluid that has passed through the flow controlling restrictor and to channel that fluid as outflow. In figure 1 the first and second portions 110, 120 are shown slightly separated for explanatory purposes. In use the first and second portion 110, 120 are coupled at a connector 112.

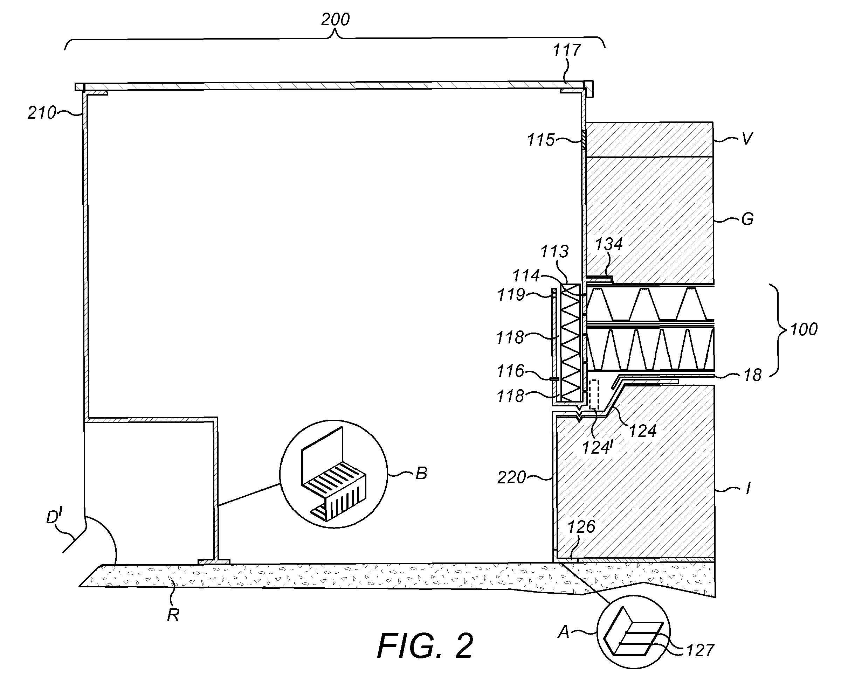

By providing the first and second portions as separate components, referred to hereinafter as the first and second components 110, 120 respectively, a single-pattern first component 110 can be supplied to be coupled to any one from a range of second components 120 of differing dimensions. This way, manufacturing costs for the outflow controller 100 can be reduced without impacting on the ease of installation in different drainage systems. For example, as will be explained in more detail below, the second component 120 passes through an opening the insulation I, and must allow the outflow controller 100 to interface effectively with the drain D, insulation I and the elements above the insulation I from which drainage is required. In this case, differing depths of insulation required for particular installations may be accommodated by selecting a second component of suitable height between its base and the level of the edge of a layer to be drained. It should be noted that although the outflow controller 100 has been shown in use with the storage and attenuation structure described above, it will be appreciated that the outflow controller 100 may also be usefully employed in combination with other, for example, related-art storage and attenuation components or drainage components. The roof structure in Figures 1 and 2 comprises an inverted green roof, but the growth medium and vegetation of the green roof may be substituted for ballast, paving etc in other roof structures, and the outflow controllers, and storage and attenuation structures described herein may equally find useful application in such roofs.

Furthermore, the single-pattern first component 110 can be used in warm roof installations, in which the roof to be drained is insulated from below, within the structural elements of the roof structure, without the need for a second component 120. This, in one aspect of the invention there is provided a first component comprising features as described herein, useful either in combination with a second component as described herein, or in combination with a roof drainage structure in which the first component cooperates directly with, for example rests on the roof surface to be drained.

The second component 120 is arranged to interface, at its outer region, with the first component 110, and with fluid received at the first component 110. The second component 120 is also arranged to interface, at its inner region, with the first component 110 and fluid that has passed through a flow controlling restrictor of the outflow controller 100. This enables the outflow controller 100 to give consistent fluid control performance, by using the second component 120 as part of the path into the outflow controller while separating the operation of the flow controlling restrictor from direct influence of the inlet to the outflow controller and the outlet of the outflow controller.

The second component 120 comprises an insulation-interfacing region 122 arranged to interface with the insulation I. The insulation-interfacing region 122 comprises a lip 124 under which the insulation I is received. The insulation-interfacing region 122 comprises a flange 126, and the insulation is received in the space there-between. The flange 122 sits above the fluid-impermeable membrane M. There is detail of this feature shown in the isometric detail insert A, where seepage slots 127 are shown. The seepage slots 127 are provided to enable moisture which does pass into the insulation I to escape under gravity. Also shown in Figure 1 and 2 is a ledge 134, which is formed on the first component 110 and is useful to keep the growth medium G out of the upper layer 11. The fluid-permeable barrier layer 19 which lies above the upper layer 11 can overlay the ledge 134 and be joined there-to, for example by adhesive, to block growth medium G from entering the upper layer 11 around the edge of the fluid-permeable barrier layer 19.

The lip 124 provides a collection surface to guide fluid received at the outflow controller 100 to the first component 110 and thereby into the flow controlling restrictor. As shown in Figure 1, the lip 124 comprises a collection channel 128 to hold fluid received at the outflow controller 100 in the region of the first component 110. Also shown, in dotted lines, is a variation in which the lip comprises a blocking portion 124' arranged to inhibit passage of fluid received at the outflow controller 100, through the connection between the second component 120 and the first component 110.

The outflow controller 100 works to restrict passage of fluid from above the insulation layer to the drain D by employing a flow controlling restrictor. The flow controlling restrictor is formed as a structure comprising an inlet opening 114 and an outlet opening 116. Between the inlet opening 114 and the outlet opening 116 is a channel 118. The channel 118 is formed within the first component 110 and receives fluid which has passed into the first component 110 from the inlet opening 114. In the embodiments shown, the outlet opening 116 operates to provide the controlled outflow from the second component.

The channel 118 between the inlet opening 114 and outlet opening 116 is open, such that if the outlet opening 116 is blocked for whatever reason, the channel 118 can still overflow, with overflow from the channel 118 passing from the first component 110 to the second component 120 and then from the second component 120 as outflow to the drain D. The channel 118 shown in Figure 1 comprises overflow openings 119 positioned below the top of the channel 118 to enable overflow from the channel 118 before the channel is filled. However, it is advantageous for the level of the top of the channel 118, or any overflow openings to be arranged above the level at which static pressure can cause fluid to overflow the channel, meaning that in normal use the outlet opening 116 drains all of the fluid there-through, and the rate control provided by the flow controlling restrictor is dictated by the outlet opening 116.

In the channel 118, a filter 113 is provided arranged between the inlet opening 114 and the outlet opening 116. The channel 118, and the filter 113 it contains are accessible from an inspection opening in the first component 110. As shown in Figure 1 the inspection opening is sealed by a lid 117. The lid 117 is removable and re-sealable onto the first component 110 so as to enable the filter 113 and channel 118 to be inspected and replaced/cleaned as necessary. Using the filter 113 as a secondary filtration element, after fluid is primarily filtered by the fluid-permeable layer 16, or the fluid-permeable layer 16 in combination with a fluid-permeable barrier layer 19 can give good filtration performance, down to particle sizes as low as 80-100 micrometres. The filter material and type are selected to give the required performance, according to requirements of the particular installation, for example in terms of porosity, flow rate, compatibility, efficiency, capacity etc. Furthermore, the channel 118 provides a sump area below the level of the outlet opening 116. This sump area acts as a silt trap for any larger particles which have passed into the flow controlling restrictor. The sump area serves to collect particles rather than allow them to pass out of the flow controlling restrictor. The sump area can be easily inspected for the presence of trapped silt, which is useful in identifying that there may be a problem in the installation. Furthermore the sump area can be easily accessed for cleaning if silt build-up is taking place.

Figure 1 shows an outflow controller 100 in which the flow controlling restrictor comprises a plurality of inlet openings 114. In this embodiment the inlet openings are numerous and sufficient that they do not cause a significant restriction in fluid flow. However, the flow controlling restrictor comprises a more limited outlet opening 116, illustrated in Figure 1 by two main outlet openings 116. The outflow controller 100 of Figure 1 is of generally rectangular section, when viewed in plan, with one main outlet opening per side to give four main outlet openings. In typical installations that are envisaged for the outflow controller a plurality of outflow openings, for example two, or ten or more may be provided.

The outlet openings 116 are provided in the form of an adjustable opening, which can be varied in effective size, for example by a simple threaded stopper or other variable obstruction held there-in. In this way, adjustment of the outlet opening 116 can be used to vary the flow rate from the outflow controller 100. For example, in an initial installation a maximum nominal flow rate of 2.5 litres/second for each hectare to be drained may be specified. However, if environmental or other conditions change after installation it is possible to adjust the outlet opening to vary the flow rate, for example to reduce the maximum nominal flow rate down to 2 litres/second for each hectare to be drained. Typical outlet openings may be in the region of a few millimetres in diameter, up to 20mm or more. In other examples the adjustable opening may comprise a movable slide, flap or iris-diaphragm that can provide a variable obstruction to the opening, or may comprise a replaceable swap-in/swap-out restrictor in which opening component can be easily replaced with another with a larger or smaller effective restriction as required.

As with the filter 113 and channel 118, the main outlet openings 116 are accessible through the inspection opening, for example to enable the adjustable opening to be maintained or adjusted.

Finally in respect of Figure 1, there is shown an overflow conduit 115 that provides a fluid communication path between the outside of the outflow controller and the drain D. The overflow conduit is at the level of the vegetation V to facilitate drainage thereof in the event of a blockage there-below, or in case of an exception extreme rainfall event.

Figure 2 shows the storage and attenuation structure of Figure 1, and an outflow controller 200 according to another example embodiment, arranged together in a drainage system. In contrast to Figure 1, where the drain D is central and the outflow controller 100 surrounds the drain D passing through the insulation I and the other layers, Figure 2 shows the outflow controller 200 at the edge of a roof R coupled to an edge drain D'. There are some modifications to the first and second components 210, 220 of the outflow controller 200, as compared to the corresponding elements shown in Figure 1, particularly in incorporating wall of the first component 210 as an interface with the edge drain D'. There is detail of this modification shown in the isometric detail insert B, in which slots are provided in the wall of the first component 210 to enable fluid to pass from the first component 210 into the drain D'.

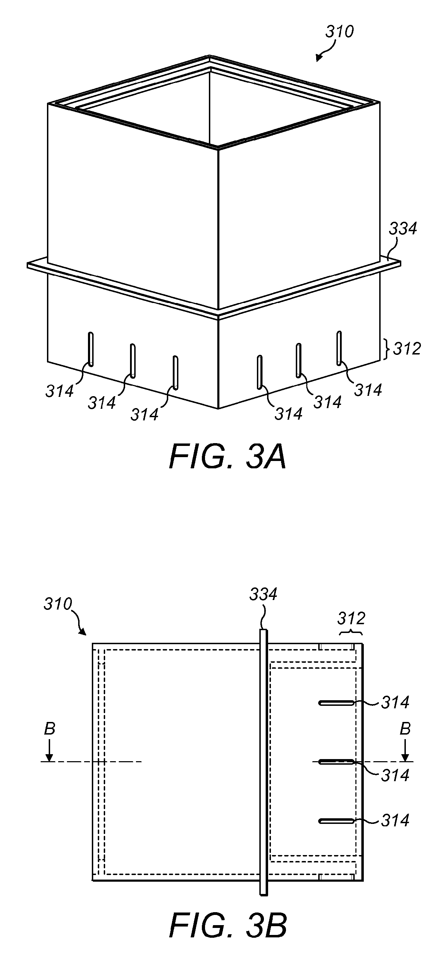

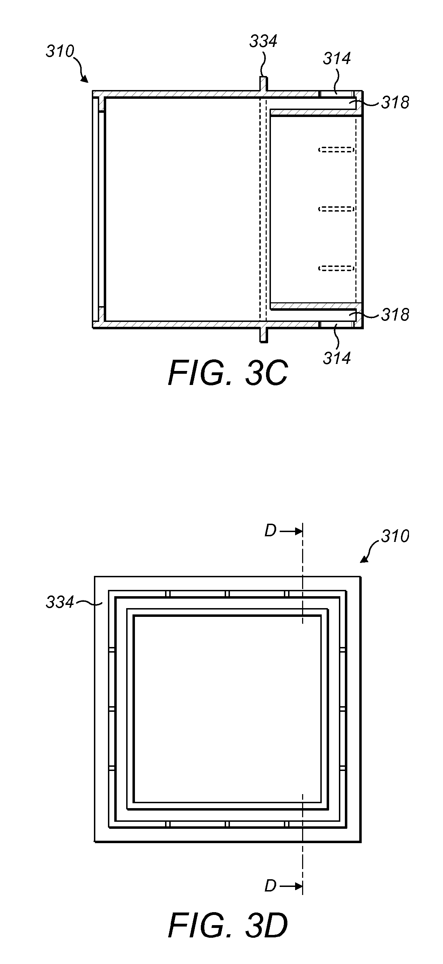

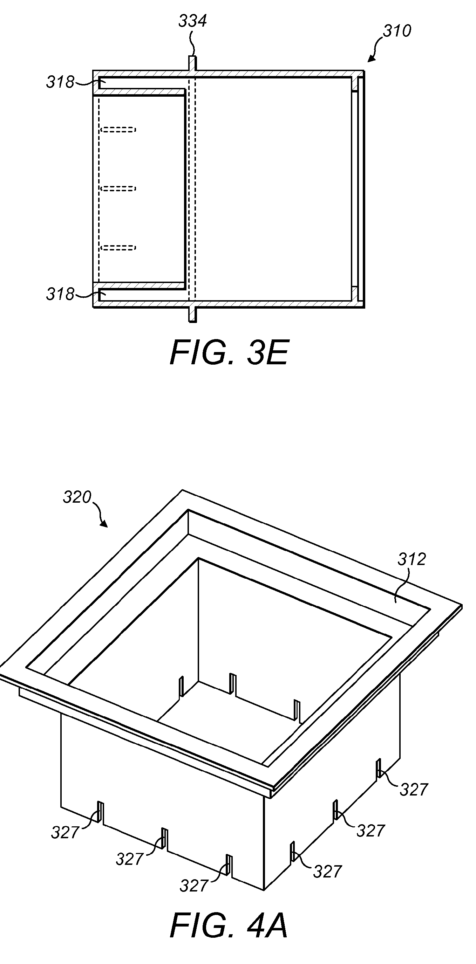

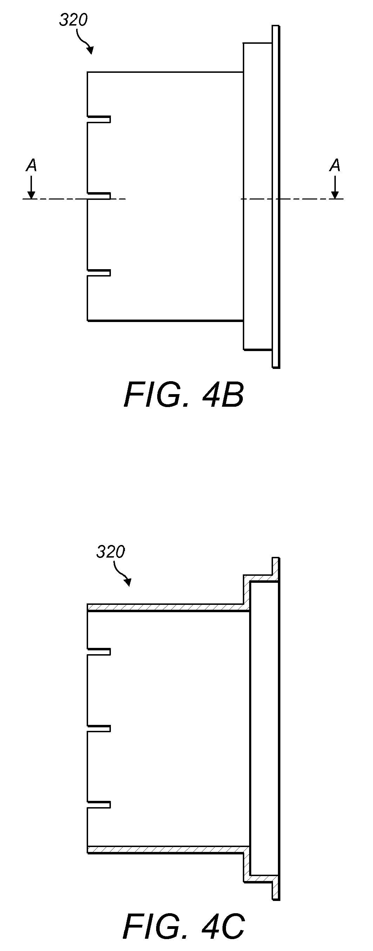

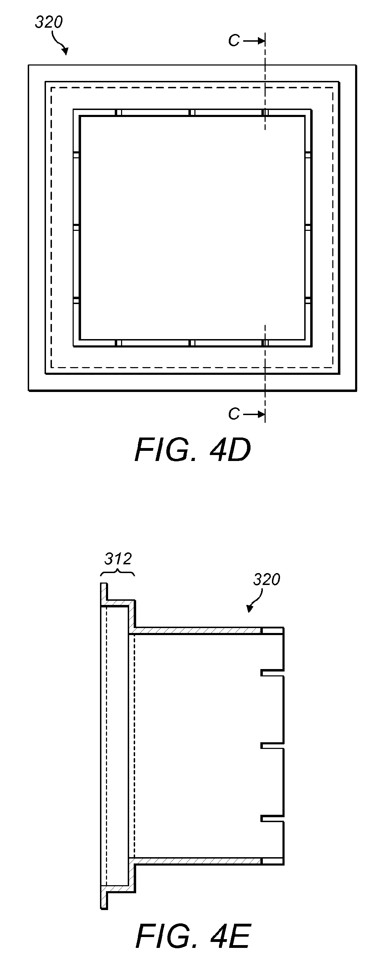

Figures 3A-3E show perspective, elevation and sectional views of a first portion 310 of an outflow controller, that is arranged to work in cooperation with a second portion 320 of an outflow controller as shown in Figures 4A-4E to form an outflow controller 300 according to another example embodiment. The region indicated 312 in these figures serves as the connection between the first and second portions 310, 320. In this embodiment there are shown limited inlet openings 314 and a channel 318 to perform the function of the flow controlling restrictor.

Although the embodiments described herein are intended for drainage of water (which herein includes aqueous based solutions as well as pure H₂O) from a green roof, other related embodiments can also be envisaged as suitable for draining other fluids, including gasses, from other media and in other situations. In relation to drainage of water in a green roof, the drainage system may also be usefully employed under block paving, car park decks or alternatively as a SUDS layer in the ground.

## Claims

1. An outflow controller comprising a first portion (110) and a second portion (120), the first portion (110) comprising a flow controlling restrictor and arranged to pass fluid received at the outflow controller through the flow controlling restrictor, and the second portion (120) comprising a drain component arranged to receive fluid that has passed through the flow controlling restrictor and to channel that fluid as outflow; **characterised in that** the flow controlling restrictor is formed as a structure comprising an inlet opening (114) and an outlet opening (116), with an open channel (118) between the inlet opening (114) and the outlet opening (118), arranged such that if the outlet opening (116) is blocked the channel (118) may overflow, with overflow from the channel (118) passing from the second portion (120) as outflow.

2. The outflow controller of claim 1, wherein the channel (118) comprises one or more overflow (119) openings positioned below the top thereof, to enable overflow from the channel (118) before the channel (118) is filled.

3. The outflow controller of claim 1 or 2, wherein the flow controlling restrictor comprises a filter element (113) arranged between the inlet opening (114) and the outlet opening (116).

4. The outflow controller of claim 1, 2 or 3, wherein the channel (118), and/or filter element (113) are arranged to be accessible from an inspection opening in the first portion (110).

5. The outflow controller of any one of claims 1 to 4, comprising one or more main outlet openings (116), with one of more of the main outlet openings (116) provided in the form of an adjustable opening.

6. The outflow controller of any one of claims 1 to 5, wherein the second portion (120) comprises an insulation-interfacing region (122) arranged to interface with an insulation layer in use with the outflow controller, the insulation-interfacing region (122) comprising a lip (124) under which insulation is in use received.

7. The outflow controller of claim 6, wherein the insulation-interfacing region (122) comprises a space between a lip (124) and a flange (126), into which insulation is in use received.

8. The outflow controller of claim 7, wherein the lip (124) is arranged to provide a collection surface to guide fluid received at the outflow controller to the first portion (110).

9. The outflow controller of any one of claims 1 to 8, wherein the first portion (110) comprises part of a first component and the second portion (120) comprises part of a second component, the separate components coupled to one another in the outflow controller.

10. The outflow controller of claim 9, wherein the first portion comprises an overflow conduit (115) that provides a fluid communication path between the outside of the flow controlling component and a drain component, wherein the overflow conduit (115) is arranged above the flow controlling restrictor.

11. The outflow controller of claim 9 or 10, wherein the second component is arranged to interface at an outer region with the first component and fluid received at the first component, and to interface at an inner region with the first component and fluid that has passed through the flow controlling restrictor.

12. The outflow controller of any one of claims 1 to 11, wherein the flow controlling restrictor comprises a seepage opening (127) arranged to work with a main outlet opening (116) to enable a small amount of seepage to take place through the flow controlling restrictor.

13. The outflow controller of any one of claims 1 to 12, wherein the flow controlling restrictor comprises a sump area arranged below main outlet opening(s) (116), arranged to collect particles from fluid as it flows from the inlet opening to a main outlet opening (116).

14. The outflow controller of any one of claims 1 to 13, wherein the main outlet opening (116), and any adjustable opening it contains, is arranged to be accessible from an inspection opening in the first portion (110).

15. The outflow controller of any one of claims 1 to 14, wherein the inlet opening (114) is less restrictive to flow than the outlet opening (116), for example such that the inlet causes a negligible restriction to flow.

## Patentansprüche

1. Abflussregler, aufweisend einen ersten Abschnitt (110) und einen zweiten Abschnitt (120), wobei der erste Abschnitt (110) einen Durchflussbegrenzer aufweist und angeordnet ist, Fluid, das beim Abflussregler aufgenommen wird, durch den Durchflussbegrenzer zu leiten, und der zweite Abschnitt (120) eine Ableitungskomponente aufweist, die zum Aufnehmen von Fluid, das durch den Durchflussbegrenzer gegangen ist, und zum Kanalisieren des Fluids als Abfluss angeordnet ist; **dadurch gekennzeichnet, dass** der Durchflussbegrenzer als eine Struktur gebildet ist, die eine Einlassöffnung (114) und eine Auslassöffnung (116) aufweist, mit einem offenen Kanal (118) zwischen der Einlassöffnung (114) und der Auslassöffnung (118), der so angeordnet ist, dass, wenn die Auslassöffnung (116) blockiert ist, der Kanal (118) überlaufen kann, wobei der Überlauf vom Kanal (118) aus dem zweiten Abschnitt (120) als Abfluss fließt.

2. Abflussregler nach Anspruch 1, wobei der Kanal (118) eine oder mehrere Überlauföffnungen (119) aufweist, die unter seiner Oberseite positioniert sind, so dass ein Überlauf aus dem Kanal (118) möglich ist, bevor der Kanal (118) gefüllt ist.

3. Abflussregler nach Anspruch 1 oder 2, wobei der Durchflussbegrenzer ein Filterelement (113) aufweist, das zwischen der Einlassöffnung (114) und der Auslassöffnung (116) angeordnet ist.

4. Abflussregler nach Anspruch 1, 2 oder 3, wobei der Kanal (118) und/oder das Filterelement (113) so angeordnet sind, dass sie von einer Inspektionsöffnung im ersten Abschnitt (110) zugänglich sind.

5. Abflussregler nach einem der Ansprüche 1 bis 4, aufweisend eine oder mehrere Hauptauslassöffnungen (116), wobei eine oder mehrere der Hauptauslassöffnungen (116) in der Form einer einstellbaren Öffnung vorgesehen sind.

6. Abflussregler nach einem der Ansprüche 1 bis 5, wobei der zweite Abschnitt (120) eine Isolierungsanbindungsregion (122) aufweist, die zum Anbinden an eine Isolierschicht in Verwendung mit dem Abflussregler angeordnet ist, wobei die Isolierungsanbindungsregion (122) eine Lippe (124) aufweist, unter welcher in Verwendung eine Isolierung aufgenommen ist.

7. Abflussregler nach Anspruch 6, wobei die Isolierungsanbindungsregion (122) einen Raum zwischen einer Lippe (124) und einem Flansch (126) aufweist, in welchem in Verwendung eine Isolierung aufgenommen ist.

8. Abflussregler nach Anspruch 7, wobei die Lippe (124) zum Vorsehen einer Sammelfläche angeordnet ist, um Fluid, das beim Abflussregler aufgenommen wird, zum ersten Abschnitt (110) zu leiten.

9. Abflussregler nach einem der Ansprüche 1 bis 8, wobei der erste Abschnitt (110) Teil einer ersten Komponente aufweist und der zweite Abschnitt (120) Teil einer zweiten Komponente aufweist, wobei die separaten Komponenten im Abflussregler aneinandergekoppelt sind.

10. Abflussregler nach Anspruch 9, wobei der erste Abschnitt eine Überlaufleitung (115) aufweist, die einen Fluidverbindungspfad zwischen der Außenseite der Durchflussreglerkomponente und einer Ableitungskomponente vorsieht, wobei die Überlaufleitung (115) über dem Durchflussbegrenzer angeordnet ist.

11. Abflussregler nach Anspruch 9 oder 10, wobei die zweite Komponente zum Anbinden an einer äußeren Region an die erste Komponente und Fluid, das an der ersten Komponente aufgenommen wird, und zum Anbinden an einer inneren Region an die erste Komponente und Fluid, das durch den Durchflussbegrenzer gegangen ist, angeordnet ist.

12. Abflussregler nach einem der Ansprüche 1 bis 11, wobei der Durchflussbegrenzer eine Aussickeröffnung (127) aufweist, die zum Zusammenarbeiten mit einer Hauptauslassöffnung (116) angeordnet ist, um ein Auftreten einer geringen Menge an Aussickern durch den Durchflussbegrenzer zu ermöglichen.

13. Abflussregler nach einem der Ansprüche 1 bis 12, wobei der Durchflussbegrenzer einen Auffangbereich aufweist, der unter der Hauptauslassöffnung bzw den Hauptauslassöffnung (116) angeordnet ist, um Teilchen aus Fluid zu sammeln, während dieses von der Einlassöffnung zu einer Hauptauslassöffnung (116) strömt.

14. Abflussregler nach einem der Ansprüche 1 bis 13, wobei die Hauptauslassöffnung (116) und jede einstellbare Öffnung, die sie enthält, so angeordnet sind, dass sie von einer Inspektionsöffnung im ersten Abschnitt (110) zugänglich sind.

15. Abflussregler nach einem der Ansprüche 1 bis 14, wobei die Einlassöffnung (114) weniger durchflussbegrenzend ist als die Auslassöffnung (116), so dass zum Beispiel der Einlass eine vernachlässigbare Durchflussbegrenzung bewirkt.

## Revendications

1. Dispositif de régulation de débordement comprenant une première partie (110) et une seconde partie (120), la première partie (110) comprenant un limiteur de régulation d'écoulement et étant agencée de manière à faire passer le fluide reçu au dispositif de régulation de débordement à travers le limiteur de régulation d'écoulement, et la seconde partie (120) comprenant un composant de drainage agencé de manière à recevoir le fluide qui est passé à travers le limiteur de régulation d'écoulement et à canaliser ce fluide comme un débordement; **caractérisé en ce que** le limiteur de régulation d'écoulement est formé comme une structure comportant une ouverture d'entrée (114) et une ouverture de sortie (116), avec un canal ouvert (118) entre l'ouverture d'entrée (114) et l'ouverture de sortie (118), agencé de telle sorte que si l'ouverture de sortie (116) est bloquée, le canal (118) puisse déborder, le débordement issu du canal (118) s'écoulant à partir de la seconde partie (120) comme un débordement.

2. Dispositif de régulation de débordement selon la revendication 1, dans lequel le canal (118) comprend une ou plusieurs ouverture(s) de débordement (119) positionnée(s) en dessous du sommet de celui-ci, de manière à permettre un débordement du canal (118) avant que le canal (118) soit rempli.

3. Dispositif de régulation de débordement selon la revendication 1 ou 2, dans lequel le limiteur de régulation d'écoulement comprend un élément de filtre (113) qui est agencé entre l'ouverture d'entrée (114) et l'ouverture de sortie (116).

4. Dispositif de régulation de débordement selon la revendication 1, 2 ou 3, dans lequel le canal (118) et/ou l'élément de filtre (113) est (sont) agencé(s) de manière à être accessible(s) à partir d'une ouverture d'inspection dans la première partie (110).

5. Dispositif de régulation de débordement selon l'une quelconque des revendications 1 à 4, comprenant une ou plusieurs ouverture(s) de sortie principale(s) (116), dans lequel une ou plusieurs des ouvertures de sortie principales (116) est (sont) prévue (s) sous la forme d'une ouverture réglable.

6. Dispositif de régulation de débordement selon l'une quelconque des revendications 1 à 5, dans lequel la seconde partie (120) présente une région d'isolation-d'interfaçage (122) qui est agencée de manière à interfacer avec une couche d'isolation lors de l'utilisation avec le dispositif de régulation de débordement, la région d'isolation-d'interfaçage (122) comprenant une lèvre (124) en dessous de laquelle une isolation est reçue lors de l'utilisation.

7. Dispositif de régulation de débordement selon la revendication 6, dans lequel la région d'isolation-d'interfaçage (122) comprend un espace entre une lèvre (124) et une bride (126), dans lequel une isolation est reçue lors de l'utilisation.

8. Dispositif de régulation de débordement selon la revendication 7, dans lequel la lèvre (124) est agencée de manière à former une surface de collecte pour guider le fluide reçu au dispositif de régulation de débordement vers la première partie (110).

9. Dispositif de régulation de débordement selon l'une quelconque des revendications 1 à 8, dans lequel la première partie (110) comprend une partie d'un premier composant, et la seconde partie (120) comprend une partie d'un second composant, les composants séparés étant couplés l'un à l'autre dans le dispositif de régulation de débordement.

10. Dispositif de régulation de débordement selon la revendication 9, dans lequel la première partie comprend un conduit de débordement (115) qui établit un chemin de communication fluidique entre l'extérieur du composant de régulation d'écoulement et un composant de drainage, dans lequel le conduit de débordement (115) est agencé au-dessus du limiteur de régulation d'écoulement.

11. Dispositif de régulation de débordement selon la revendication 9 ou 10, dans lequel le second composant est agencé de manière à interfacer à une région extérieure avec le premier composant et avec le fluide reçu au premier composant, et à interfacer à une région intérieure avec le premier composant et avec le fluide qui est passé à travers le limiteur de régulation d'écoulement.

12. Dispositif de régulation de débordement selon l'une quelconque des revendications 1 à 11, dans lequel le limiteur de régulation d'écoulement comprend une ouverture de suintement (127) agencée de manière à opérer avec une ouverture de sortie principale (116) afin de permettre à une petite quantité de suintement de survenir à travers le limiteur de régulation d'écoulement.

13. Dispositif de régulation de débordement selon l'une quelconque des revendications 1 à 12, dans lequel le limiteur de régulation d'écoulement comprend une région de puisard agencée en dessous de la ou des ouverture(s) principale(s) (116), agencée de manière à collecter des particules depuis le fluide pendant que celui-ci s'écoule à partir de l'ouverture d'entrée jusqu'à une ouverture de sortie principale (116).

14. Dispositif de régulation de débordement selon l'une quelconque des revendications 1 à 13, dans lequel l'ouverture de sortie principale (116), ainsi que toute ouverture réglable qu'elle comporte, est agencée de manière à être accessible à partir d'une ouverture d'inspection dans la première partie (110).

15. Dispositif de régulation de débordement selon l'une quelconque des revendications 1 à 14, dans lequel l'ouverture d'entrée (114) est moins restrictive de l'écoulement que l'ouverture de sortie (116), par exemple de telle sorte que l'entrée entraîne un étranglement négligeable de l'écoulement.
